# EUROPEAN PATENT APPLICATION

(11) **EP 4 645 057 A1**
(43) Date of publication of application: **05.11.2025**
(21) Application number: 24173410.2
(22) Date of filing: 30.04.2024
(51) Int. Cl.: G06F 3/12

(54) **A PRINT MEDIA SOURCE PROCESSING PRINTER AND A METHOD THEREFOR**

(71) Applicant: Canon Production Printing Holding B.V., 5914 HH Venlo (NL)
(72) Inventor: VAN KNIPPENBERG, René M.D., Venlo (NL); DE JONG, Frederik, Venlo (NL)
(74) Representative: Canon Production Printing IP Department

(57) **Abstract**

A print media source processing printer comprising a plurality of print media sources, a print controller comprising a print queue comprising print jobs, a print media source scheduler to schedule the plurality of print media sources, and a dynamic print media request list. The dynamic print media request list contains a requested amount and kind of print media in chronological order based on the jobs in the print queue and accumulated per kind of print media. Each print media source is configured to hold a stack of print media. The print media source scheduler comprises for each print media source a representation of the print media source which indicates if the print media source is in use or will be in use, and how long the print media source will be in use. Upon loading print media at a print media source, unloading print media from a print media source and/or updating the print queue, both the dynamic print media request list and the print media source scheduler are updating accordingly.

## Description

### BACKGROUND OF THE INVENTION

### 1. Field of the invention

The present invention relates to a print media source processing printer comprising a plurality of print media sources and a print controller comprising a print queue comprising print jobs.

The print media source may be a tray or a pallet.

### 2. Description of Background Art

Operators in a high velocity industrial environment working with multi-media printers have a daily challenge to keep the printers running. One crucial aspect in said keep-running challenge is providing the printer with the right amount and right kind of print media in time. Besides the print media itself, the destination of the requested print media is also important. Opening a tray which is in use causes the engine to stop and a tray that is not in use is safe to open as it will not stop the printing process. Next, unloading unused print media and loading new kind of print media takes time and can be quite cumbersome, especially if the printer copes with large print media sizes. For printers which can be loaded with print media via a stack feeder and/or via a conventional tray feeder, the requested amount of print media also plays a significant role. Operators may use a print job scheduler as described in US patent 8953997. Such a print job scheduler comprises a vertical list of all the input trays and on the bottom the output stackers. Attached to each of these input trays is a bar-like timeline, indicating when the media in the tray is used and for how long (green), when the media is almost running out in the tray (orange), and when the media is missing in the tray (red). The goal of the operator is to keep these bars green, resembling the keep-running idea. When a bar is orange, the operator needs to shift his focus first to the top to see when this will happen (how much time do I have), next, he needs to shift his focus to the left side of the screen to see which tray is empty and which media is required. The required number of media is not visible in this screen but can be calculated/estimated by himself in a different job screen. Also, there is no discrimination between input trays. Actually, it is cumbersome that the operator has no control over which print media source is used because this is decided by embedded controls.

### SUMMARY OF THE INVENTION

It is an object of the invention to provide a printer which supports the operator in making optimal choices between loading of print media sources.

In accordance with the present invention, a print media source processing printer according to claim 1, a method according to claim 5 and a computer program according to claim 6 are provided.

The present invention is based on a dynamic print media request list in combination with an agenda-like overview of the printer and its current print media resources shown in a user interface of the printer according to the present invention. On the one side of a user interface screen, the user interface screen shows the requested amount and kind of print media in chronological order based on the print jobs in the queue. On the other side of the user interface screen, the user interface screen shows all print media sources of the printer, which print media source (tray(s) or pallet) is in use, when the print media source is or will be in use (active versus queued), and, how long the print media source will be in use. By loading or unloading print media or updating the print job queue, both the dynamic list of the print media requests as the agenda overview update accordingly. Thereby, the object of the present invention has been achieved.

More specific optional features of the invention are indicated in the dependent claims.

According to an embodiment the print media source is a pallet or a tray.

According to an embodiment the print media source processing printer comprises a user interface for displaying the dynamic print media request list, a visualization of the print media source scheduler comprising the plurality of print media sources in separate digital objects, each separate digital object comprising a time axis and an amount of print media loaded in the print media sources which is scheduled to be used in a time frame indicated by the time axis. Each print media source is visualized in a dedicated digital object which is scheduled by the print media source scheduler.

According to an embodiment the user interface comprises a jobs application window for displaying the print jobs in the print queue which is to be opened separately from the visualization of the print media source scheduler.

According to another embodiment, upon selection of a digital object representing a print media source a drill-down screen is displayed with print jobs of the print job queue for which print media is loaded in the print media source.

The present invention also relates to a method for scheduling print media in print media sources for a print media source processing printer according to the present invention, wherein the method comprises the steps of
- receiving print jobs in the print queue of the print media source processing printer, the print jobs requiring print media,
- accumulating amounts of the print media required by the print jobs per kind of print media in a print media request list,
- attributing a print media in the print media request list to a print media source,
- scheduling the print media source with the corresponding accumulated amount and kind of print media in time by means of the print media source scheduler of the print media source processing printer, and
- displaying the scheduled print media source with the corresponding accumulated amount of print media in a time schedule at the user interface of the print media source processing printer.

The present invention also relates to a computer program product, including computer readable code embodied on a computer readable medium, said computer readable code comprising instructions for executing the steps of a method according to the present invention on a print media source processing printer according to the present invention.

The present invention additionally relates to a computer-readable medium having stored thereon the above mentioned computer program product.

Further scope of applicability of the present invention will become apparent from the detailed description given hereinafter. However, it should be understood that the detailed description and specific examples, while indicating preferred embodiments of the present invention, are given by way of illustration only, since various changes and modifications within the spirit and scope of the present invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
- Fig. 1: is a schematic cross-sectional, side view of a representation of a printer according to the present invention;
- Fig. 2: is a schematic top view of a printer according to the present invention;
- Fig. 3: is a user interface screen of a user interface of a printer according to the present invention;
- Fig. 4: is a flow diagram of a method according to the present invention; and
- Fig. 5: is a schematic diagram of a computer readable medium according to the present invention.

### DETAILED DESCRIPTION OF THE PREFERRED EMBODIMENTS

The present invention will now be described with reference to the accompanying drawings, wherein the same reference numerals have been used to identify the same or similar elements throughout the several views.

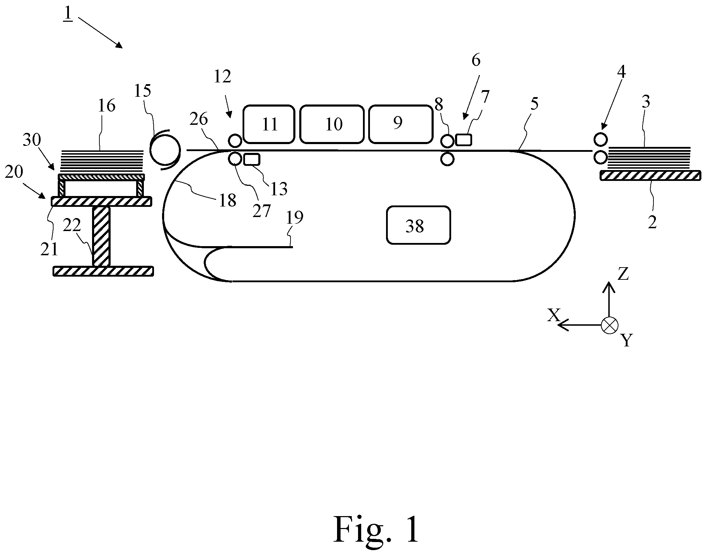

Fig. 1 illustrates a sheet printer 1. An input module 4 on the right side comprises one or more input stack supports 2 supporting at least one stack 3 of sheets. The stack supports may be pallets or print media trays. Individual sheets are separated from the stack 3 by the input module 4, which places the sheets on an input path of the printer 1. The input module 4 may comprise a separator to separate individual sheets from the stack 3. The input path brings the sheets to a print path section, illustrated as a straight, linear path, where the sheet is processed for printing thereon. The print path section comprises a switch 5 positioned at an intersection of the input path and a duplex path, which duplex path is arranged to return printed sheets to the print path. Sheets on the print path can thus be a mix of unprinted or one-side printed sheets.

The print path comprises a first registration unit 6 downstream of the switch 5. The first registration unit 6 comprises a first sheet detector 5 for detecting a position and orientation of each sheet. The orientation of the sheet is e.g. the angle of its forward facing or leading edge with respect to the transport direction X. Dependent on the measured position and orientation, the first registration unit 6 controls its registration drive 7 to position the sheet to a predefined position and/or align the sheet to a predefined orientation, for example with its leading edge perpendicular to the transport direction X, so that it will be parallel to the printhead assembly 10.

The registered sheet subsequently passes by a coater 9, which applies a liquid coating on at least a portion of the treated surface. The coater 9 may for example comprise an array of printheads configured to jet droplets of coating liquid or comprise a roller for transferring coating liquid as the roller rolls over the sheet. Any suitable coating liquid may be applied, such as for example Canon ColorGrip. The coating liquid preferably forms a continuous coat on the sheet, which enables or improves the bonding of color inks to the sheet.

The coated sheets travels to the printhead assembly 10, which jets one or more layers of color inks onto the coated sheet. The printhead assembly 10 is preferably a page wide array of inkjet printheads to allow productive printing.

The jetted color inks are then fixed onto the sheet by means of a fixation unit 11. The fixation unit 11 applies or removes energy from the sheet, so that the jetted color inks undergo a phase change. The fixation unit 11 may comprise coolers and/or heaters, such radiation heaters with e.g. UV or IR light, hot air blowers, such as impingement blowers, contact heaters, such a heated transport belt or drum, etc. Alternatively or additionally, the fixation unit 11 may comprise a curing station, which emits light with a wavelength which induces a chemical reaction in the color inks and/or coating liquid, causing these to solidify.

At the downstream side of the print path, a second registration unit 12 is provided to adjust the position and/or orientation of the sheets. This second registration unit 12 may be configured similar to the first registration unit 6. The second registration unit 12 can be applied to position and/or orientation a sheet with respect to a specific output location, for example a stacking location. The second registration unit 12 comprises its own registration drive 27 and may comprise a sheet detector 13, or the sheet's position can be derived by tracking the sheet's movement after detection by the first sheet detector 7.

At the end of the print path, a further switch 26 is provided to selectively direct sheets into the duplex path or to the output location. The duplex path preferably comprises a turn station, which inverts the sheet, so that it leaves the duplex path with its unprinted side eventually facing the printhead assembly 10. The output location in Fig. 1 comprises a stacker 20, which gathers the printed sheets in a further stack 16 on a pallet 30 on a pallet support 21. The stacker 20 comprises a stacking unit 15, which receives printed sheets and positions these on top of another into the stack 16. The stacking unit 15 may in one example comprise a rotatable flipping wheel with one or more slots at its circumference for holding a leading edge of a sheet. By rotating the flipping wheel as it holds the sheet, the sheet is flipped, and then released from the slots as the leading edge of the sheet contacts a stop at the bottom side of the flipping wheel. Such a stacking unit is known from US 9457980 B2, the content of which is herein incorporated by reference. The pallet support 21 of the stacker 20 is provided on a lift 22, so that its position in the vertical direction Z can be adjusted. This allows the top of the stack 16 to be at the working level of the stacking unit 15 as the stack height increases. The pallet support 21 is configured for supporting a pallet 30, though it absence of a pallet it may be suited for directly stacking sheets thereon as well.

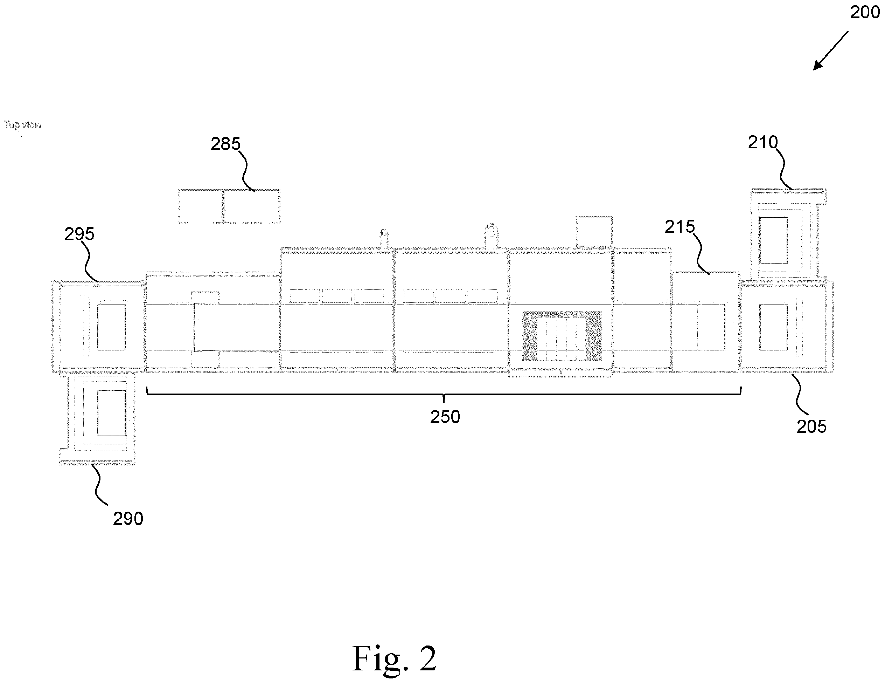

Fig. 2 shows a top view 200 of the print media source processing printer according to the present invention. The print media source processing printer comprises a middle part 250 comprising the print heads, the coater, the dryer and the print path which leads from the right side of part 250 to the left side of part 250 in Fig. 2.

At the right side of Fig. 2 there are two locations 205, 210 for the pallets to be processed. The first location 205 may contain a first pallet with a stack of sheets which is scheduled to be processed immediately when the printer is ready. The second location 210 may contain a second pallet which may contain, is currently loaded or planned to be loaded with a stack of sheets which will be processed after the processing of the first pallet at the first location 205. A transport mechanism (not shown) is configured to move the second pallet from the second location to the first location, for example an installation for automatic pallet replacement.

At the right side of Fig. 2 there is also a location 215 for one or more print media trays for holding print media to be processed by the printer 1.

At the left side of Fig. 2 there are two locations 290, 295 for the pallets which are configured to gather processed sheets which are received from the left side of the middle part 250 of printer 1. A user interface 285 is positioned near the printer 1 and wired or wireless connected to the printer 1. In another more preferred embodiment the user interface is built in or attached to the printer 1 in a close neighbourhood of the location 205.

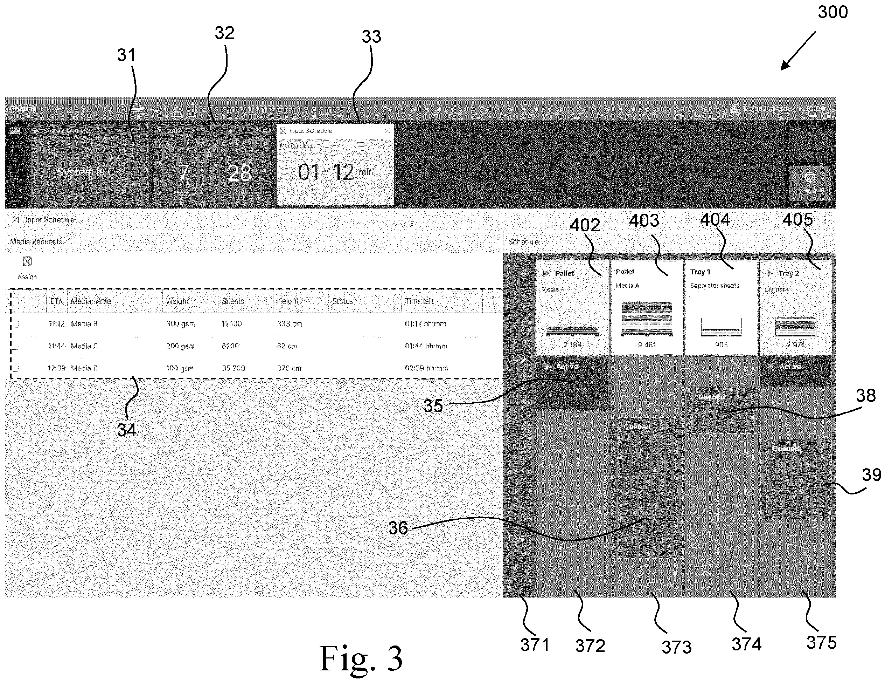

Fig. 3 shows a user interface screen 300 according to the present invention. The user interface screen 300 is presented to the operator at the user interface 285 of the printer 1 shown in Fig. 2.

At the left side of the user interface screen 300 the print media request list 34 according to the present invention is provided. The print media request list 34 comprises the print media which are derived from the print job specifications of print jobs which have arrived in the print queue (not shown) of the printer 1. From the print job specifications the amount and kind of print media are derived. The amounts are accumulated per kind of print media and then entered as entries in the print media request list 34. The print media request list 34 comprises per entry an ETA time (Estimated Time of Arrival), a print media name, a weight of the print media, a number of sheets of the print media, a height of the number of sheets of the print media when stacked, a status of the print media and a time left before processing the print media.

At the right side of the user interface screen 300 the print media source scheduler is presented in a number of columns 371 - 375 wherein the first column 371 is a (vertical) time line and the other columns 372 - 375 represent the number and kind of print media sources of the printer 1. The columns 372 - 375 comprise planned print media sources by means of the print media source scheduler. Block items 35, 36, 38. 39 indicate when the print media source will be used and for how long, independently from an output stack which will be leave the other end of the printer, i.e. at the locations 290, 295 shown in Fig. 2. The kind of print media of a print media source and the amount of print media in the print media source is presented in the respective header 402 - 405 of the corresponding print media source column 372 - 375. The amount of print media in the print media source is shown in the form of a digital number as well as in the form of a picture of the print media source having a corresponding height of sheets. In this example there are four print media sources, i.e. two print media pallets (columns 372, 373) and two print media trays (column 374, 375).

The four print media sources are automatically scheduled in time by the print media source scheduler. The operator does not have to state via the user interface 285 of the printer 1 which print media source will be used and when. The printer 1 itself determines what is the most efficient way to use a tray or a pallet. For example, when an automatic pallet replacement is carried out, the printer must get the print media from a tray in the meantime. When the automatic pallet replacement is finished, the printer continues using print media from the new pallet. This is advantageous since the automation of scheduling the print media sources results in a productive way of using the printer 1, i.e. the printer 1 achieves a very high percentage of uptime.

The position of a block item 35, 36, 38, 39 of the print media source in the print media source columns 372 - 375 determine together with the time axis in the first column 371 a start time and end time of the use of the print media source (pallet or tray) represented by the block items. The time axis in column 371 together with the print media source columns 372 - 375 show when a print media source is in use and for how long. It may be that one long block in the columns 372 - 375 which has the status "active" and represents a print media source in use results in many (small) output stacks at the other end of the printer 1.

In the horizontal top bar tiles 31, 32, 33 are visible which indicate respectively a printing system status, a planned production in units of pallets and/or trays and in units of print jobs, and a time left for a next media request at one of the print media sources.

A colour or any other visual element of the block item 35, 36, 38, 39 may indicate if a print media source is in use or is planned to be in use in the near future. For example, the pallet 35 in the column 372 and a tray in the column 375 are dark coloured since they are in an active state, i.e. in use. The pallet 36 in the column 373 and the tray 39 in the column 375 are light coloured since they are not in use, but are queued for use. For example the pallet 36 is planned to be processed after the processing of the pallet 35.

In the example Fig. 3 shows a user interface screen of a printer with four print media sources of two different types, i.e. pallets and trays. However, according to the present invention also a printer having at least two print media sources of at least one type of pallet and/or tray is deemed to be within the scope of the present invention. For example, a printer with a plurality of trays, a printer with a plurality of pallet feeders as well as a printer with a plurality of trays and a plurality of pallet feeders may be envisioned.

The schedule calculation approach of the print media source scheduler will be elucidated hereinafter by means of two examples.

In the first example it is assumed that the printer is empty with no media in the print media sources and 2 print jobs are received in the print job queue: print job 1 requires 20 sheets of print media A and print job 2 also requires 20 sheets of print media A and an additional 10 sheets of print media B. Print job 1 will start at 10:00h and, based on its job length, print job 2 will start at 10:05h. In case of no print media available in the printer, the printer will trigger a print media request action for the operator. The printer will request 20 sheets of print media A before 10:00h and another 20 sheets of print media A before 10:05h and 10 sheets of print media B before 10:05h. According to the present invention the sum of all similar print media requests is calculated and displayed in the print media request list chronologically. In the first example, the print media request list will only consist of 2 media requests: print media A requiring 40 sheets (the sum of job 1 and job 2) at 10:00h and print media B with 10 sheets at 10:05h. This is very beneficial for the operator as he now can load simply at least 40 sheets of print media A for both jobs at the same time and be done with print media A, instead of doing this loading multiple times. Also, the print media request list with print media requests also acts like a shopping list for the operator as it will help him retrieving the right amount of print media in time from the warehouse at once.

In a second example which is almost equal to the first example, a new job arrives in the print job queue between job 1 and job 2 that requires print media C. Then the print media source scheduler will not calculate the sum of all print media A. The print media scheduler will first ask for print media A, secondly for print media C and, next ask for print media A again. It is up to the operator to decide to tackle both print media requests for print media A at once or divide the print media requests over the time since there is a job in between the jobs with print media A. This is really depending on the print job queue and its job lengths.

In the first and second example described hereinabove, extreme low amounts of print media requests are mentioned, but in practice for high volume printers the amounts will be much larger, for example thousands of sheets (pallets full of paper) and quite some lengthy jobs. Displaying these amounts helps the operator to decide where to put the print media (tray versus pallet). For example, the operator will choose a pallet over a tray if there is a media request with an extremely high amount of print media.

The print media source scheduler displayed on the right side of the user interface screen 300 comprises visualizations 402 - 405 of all the engine print media sources and also displays the type and amount of print media that is loaded per print media source. It also displays which tray/pallet is in use and which is not. This indication can help the operator to see which tray he can open safely without the need of stopping the printer. The printer will stop printing if the operator opens a tray that is in use.

Below the visualizations 402 - 405 there is an agenda-like representation for every print media source (tray or pallet) in the columns 372 - 375. The content of this agenda is based on print jobs of the print job queue. The lengths of the blocks 35 - 39 in each print media source column 372 - 375 are determined by the print jobs in the print job queue and the logic of the printer where to retrieve the print media if multiple print media sources contain similar print media. The printer decides based on the print media available and the location of the print media source where to collect the print media in order to become even more efficient. This agenda representation depicts on the one side how long a print media source is currently in use but could also display if the print media source is planned to be in use (queued) for later jobs. This latter aspect can help the operator in deciding if and which tray can be unloaded.

In Fig. 3 there is a small time gap between the use of pallet 35 and the pallet 36 because when the pallet 35 is completely processed and thus empty the pallet 35 has to be removed from its location in order to move the pallet 36 to the same location. This move may be done manually or preferably by means of a transport mechanism which is part of the printer 1 in order to enable an automatic pallet replacement.

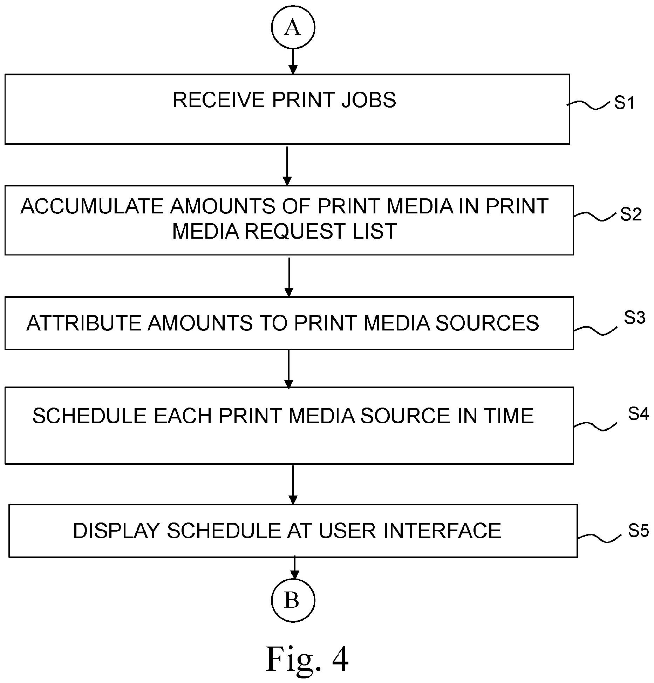

Fig. 4 is a flow diagram of the method according to the present invention. The method starts in a starting point A which leads to a first step S1.

In the first step S1 print jobs are received in the print queue of the print media source processing printer, the print jobs requiring print media.

In a second step S2 amounts of the print media required by the print jobs are accumulated per kind of print media. The accumulated amounts are gathered in a print media request list in memory of the printer.

In a third step S3 the print media in the print media request list are attributed to a print media source. The third step S3 of assigning a media request to a print media source is preferably done manually by the operator by means of the user interface of the printer. In particular, the operator assigns the kind of print media to the print media source.

In a fourth step S4 the print media source scheduler is scheduling in time a use of the print media source of the print media source processing printer. The scheduling is based on the available print media - type and amount - at the print media sources in the printer. Given said availability the print media source scheduler defines which print media source is used when and for how long.

In a fifth step S5 the scheduled print media source is displayed with the corresponding accumulated amount of print media in a time schedule at the user interface of the print media source processing printer. The print media source is visible in the time schedule at the user interface of the printer as for example shown in Fig. 3.

The method ends in an end point B.

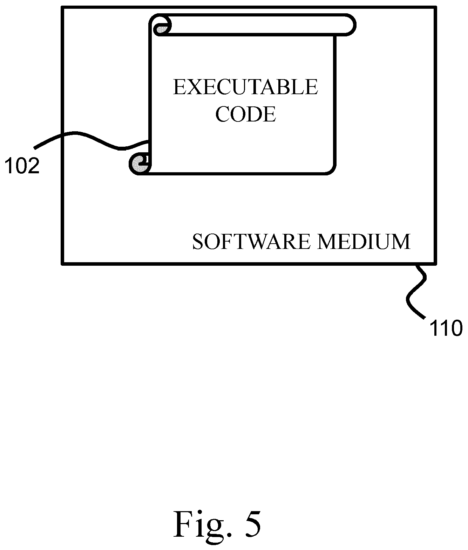

Fig. 5 schematically shows a non-transitory software medium 110 according to the invention. The software medium 110 comprises executable code 102 configured to, when executed, perform the method according to the invention, e.g. as described with respect to either the printer shown in Fig. 1 or the method shown in Fig. 4 and/or according to any of the variants and modifications of the printer and/or of the method described hereinbefore.

The non-transitory software medium 110 may, specifically, be formed as a CD or a CD-ROM, a DVD or a DVD-ROM, a Blu Ray disc or a Blu Ray-ROM disc, a magnetic hard drive, a solid state disk (SSD) hard drive, a USB memory device and so on.

Although specific embodiments of the invention are illustrated and described herein, it will be appreciated by those of ordinary skill in the art that a variety of alternate and/or equivalent implementations exist. It should be appreciated that the exemplary embodiment or exemplary embodiments are examples only and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

It will also be appreciated that in this document the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

The present invention being thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A print media source processing printer comprising a plurality of print media sources, a print controller comprising a print queue comprising print jobs, a print media source scheduler to schedule the plurality of print media sources, and a dynamic print media request list,
wherein
- the dynamic print media request list contains a requested amount and kind of print media in chronological order based on the jobs in the print queue and accumulated per kind of print media,
- each print media source is configured to hold a stack of print media,
- the print media source scheduler comprises for each print media source a representation of the print media source which indicates if the print media source is in use or will be in use, and how long the print media source will be in use, and
- upon loading print media at a print media source, unloading print media from a print media source and/or updating the print queue, both the dynamic print media request list and the print media source scheduler are updating accordingly.

2. A print media source processing printer according to claim 1, wherein the print media source is a pallet or a tray.

3. A print media source processing printer according to any of the preceding claims wherein the print media source processing printer comprises a user interface for displaying the dynamic print media request list, a visualization of the print media source scheduler comprising the plurality of print media sources in separate digital objects, each separate digital object comprising a time axis and an amount of print media loaded in the print media sources which is scheduled to be used in a time frame indicated by the time axis.

4. A print media source processing printer according to claim 3 wherein the user interface comprises a jobs application window for displaying the print jobs in the print queue which is to be opened separately from the visualization of the print media source scheduler.

5. A print media source processing printer according to claim 3 wherein upon selection of a digital object representing a print media source a drill-down screen is displayed with print jobs of the print job queue for which print media is loaded in the print media source.

6. A method for scheduling print media in print media sources for a print media source processing printer according to claim 1, wherein the method comprises the steps of
- receiving print jobs in the print queue of the print media source processing printer, the print jobs requiring print media,
- accumulating amounts of the print media required by the print jobs per kind of print media in a print media request list,
- attributing a print media in the print media request list to a print media source,
- scheduling the print media source with the corresponding accumulated amount and kind of print media in time by means of the print media source scheduler of the print media source processing printer, and
- displaying the scheduled print media source with the corresponding accumulated amount of print media in a time schedule at the user interface of the print media source processing printer.

7. A computer program product, including computer readable code embodied on a computer readable medium, said computer readable code comprising instructions for executing the steps of a method according to claim 5 on a print media source processing printer according to any one of the claims 1 - 4.
